# EUROPÄISCHE PATENTANMELDUNG

(11) **EP 1 270 987 A2**
(43) Veröffentlichungstag der Anmeldung: **02.01.2003**
(21) Anmeldenummer: 02001205.0
(22) Anmeldetag: 17.01.2002
(51) Int. Cl.: F16F 1/387

(54) **Aggregatelager in Buchsenform**

(30) Priorität: 27.06.2001 DE 10131075
(71) Anmelder: Carl Freudenberg KG, 69469 Weinheim (DE)
(72) Erfinder: Hettler, Werner, 68309 Mannheim (DE)

(57) **Zusammenfassung**

Aggregatelager (1) in Buchsenform mit einem Außenring (2) und einem inneren Stützteil (4) sowie dazwischen angeordneten Gummifedern (5, 6), wobei der Außenring (2) zumindest in den Anschlussbereichen (8, 9) der Gummifedern (5, 6) vorzugsweise in der Hauptlastrichtung (7) mit Aussparungen (10, 11) versehen ist, und dass die Aussparungen (10, 11) mit Endwülsten (12, 13) versehen sind, die über die Außenkontur des Außenrings (2) hervor stehen.

## Beschreibung

### Technisches Gebiet

Die Erfindung betrifft ein Aggregatelager in Buchsenform mit einem Außenring und einem inneren Stützteil sowie dazwischen angeordneten Gummifedern.

Bei den bekannten Aggregatelagern dieser Art werden die Gummifedern in den Zwischenraum zwischen Außenring und Stützteil einvulkanisiert. Diese Verfahrensweise hat die Eigenschaft, dass bei der sich an diese Vulkanisierung anschließenden Abkühlung des Lagers eine Schrumpfung der Gummifedern eintritt, welche eine Zwischenraumvergrößerung zur Folge hat, die sich bezüglich der gewünschten Lagercharakteristik nachteilig auswirken kann.

### Stand der Technik

Um den oben genannten Nachteil zu vermeiden ist durch die DE 38 40 176 C2 bekannt geworden, in den dann vergrößerten Spalt einen Zusatzkörper einzufügen, durch den eine elastische Vorspannung erreicht wird. Diese Maßnahme führt zu einem frühen Einsatz der Progression in Zugrichtung des Lagers. Durch eine Kalibrierung ist es möglich, das Aggregatelager ohne Zusatzkörper auszubilden und einzusetzen. Durch die Kalibrierung muss jedoch der Spalt ganz oder zumindest teilweise eliminiert werden. Dieses bereitet dann Schwierigkeiten, wenn der Spalt größere Abmessungen von beispielsweise bis zu 4 mm erreicht. Dabei setzt sich das Spaltmaß aus zwei Teilen zusammen, zum einen aus dem bereits erwähnten Schwundmaß in der Größenordnung von bis zu 2 mm und dem fertigungstechnisch bedingten Mindestmaß für die Herstellung der axialen Durchdringungen an den Gummifedern. Besonders schwierig gestaltet sich die Kalibrierung, wenn der Außenring mit einem profilierten Elastomerüberzug versehen ist.

### Darstellung der Erfindung

Der Erfindung liegt die Aufgabe zugrunde ein Aggregatelager zu schaffen, welches kostengünstig hergestellt werden kann und die durch die Schwindung an den Gummifedern entstehenden Nachteile vermeidet.

Die Lösung der gestellten Aufgabe erfolgt bei einem Aggregatelager der eingangs genannten Art erfindungsgemäß dadurch, dass der Außenring zumindest in den Bereichen der Gummifederanschlüsse in der Hauptlastrichtung mit Aussparungen versehen ist und dass die Aussparungen mit Endwülsten versehen sind, die über die Außenkontur des Außenrings hervor stehen. Die neue Konstruktion bevorzugt die Verwendung eines Außenrings, der mit einem Elastomer überzogen ist, wodurch der relativ teure Korrosionsschutz bei einem nicht mit einem Elastomer überzogenen Metallring als Außenring vermieden wird. Durch die Anwendung der radial vorstehenden Endwülste kann die aufwendige Kalibrierung entfallen. Während des Einbaus des Lagers in eine entsprechende Halterung werden die Endwülste durch die Aussparungen im Außenring radial nach innen gedrückt, so dass das Schwundmaß der Gummifedern aufgehoben oder gar eine Vorspannung der Gummifedern erreicht wird. Für diese Zwecke ist der Abstand zwischen der Endwulsthöhe und der Außenkontur des Außenrings so gewählt, dass er dem durch die Vulkanisation entstehenden Schwundmaß an den Gummifedern entspricht bzw. größer ist als das Schwundmaß. Der Erfindungsgedanke sieht folglich vor, wenigstens eine Gummifeder des Lagers so auszubilden, dass deren Endwulst durch eine im Außenring vorhandene Aussparung hindurch greift, die nach dem Einsatz des Lagers in einer Halterung radial nach innen durch die Aussparung gedrückt wird und dadurch mindestens das Schwundmaß eliminiert. Bei entsprechender Ausbildung und Höhe der Endwülste kann durch das Eindrücken sogar eine Vorspannung auf die Gummifedern ausgeübt werden, was bei einer Reihe von Einsatzfällen gewünscht ist.

In Fortführung des Erfindungsgedankens ist es sogar möglich, dass auf dem Außenring auf der von der Feder abgewandten Seite ein Wulst angebracht wird. Der Wulst ist in diesem Fall von der Gummifeder getrennt. Durch den Einbau des Lagers in die Halterung kann nun mit dem damit verbundenen Eindrücken der Endwulst in radialer Richtung in die Aussparung im Außenring der fertigungsbedingte Freiweg und auch die durch den Schwund entstehende Vergrößerung des Trennspalts überbrückt werden. Der Endwulst liegt so am inneren Stützteil wieder an. In diesem Fall ist der Außenring in dem bzw. den Bereichen des fertigungsbedingten geringsten freien Abstands zwischen dem Außenring und dem inneren Stützteil mit einer der Anzahl der Bereiche entsprechenden Anzahl von Aussparungen versehen. Gleichzeitig hat der Elastomerüberzug des Außenrings in diesen Bereichen Verdickungen, die bei montiertem Lager die fertigungsbedingten Räume zwischen Außenring und Stützteil mindestens ausfüllen.

Zur Herstellung einer festsitzenden, konzentrischen Lage des Aggregatelagers ist der Elastomerüberzug des Außenrings auf seiner Außenseite mit Erhebungen in an sich bekannter Weise versehen. Diese Erhebungen verlaufen beispielsweise in Wellenform in axialer Richtung des Außenrings.

Um eine zusätzliche Begrenzung des Freiwegs des inneren Stützteils quer zur Hauptarbeitsrichtung zu erreichen, kann der Außenring in seinen zur Hauptlastrichtung seitlich liegenden Wänden mit Zusatzaussparungen versehen werden, die von Auswölbungen des Elastomerüberzugs überdeckt sind und die in montierter Lage radial nach innen in den Außenring eingedrückt werden. Die Auswölbungen entsprechen in ihrer Gestalt in etwa den vorher behandelten Endwülsten und können in gleicher Weise durch die Aussparungen im Außenring radial in das Lager eingedrückt werden. So kommen dann die entsprechend ausgestalteten Anschläge quer zur Hauptlastrichtung früher zum Einsatz.

### Kurzbeschreibung der Zeichnungen

Anhand mehrerer in der Zeichnung dargestellter Ausführungsbeispiele wird die Erfindung nachstehend erläutert.
Es zeigt:
- Figur 1: ein Aggregatelager für symmetrische Zug- /Druckbeanspruchung im Querschnitt,
- Figur 2: das Aggregatelager nach Figur 1 im Längsschnitt,
- Figur 3: ein Aggregatelager für großen Arbeitsweg in einer radialen Richtung im Querschnitt,
- Figur 4: das Aggregatelager nach Figur 3 im Längsschnitt,
- Figur 5: eine Draufsicht auf das Aggregatelager nach Figur 3,
- Figur 6: das Aggregatelager nach Figur 3 im Querschnitt, eingebaut in eine Halterung,
- Figur 7: einen Längsschnitt durch das Aggregatelager nach Figur 6,
- Figur 8: ein Aggregatelager im Querschnitt mit zusätzlicher Querwegbegrenzung,
- Figur 9: das Aggregatelager nach Figur 8 im eingebauten Zustand und
- Figur 10: eine weitere Ausbildung des Aggregatelagers im Querschnitt.

### Ausführung der Erfindung

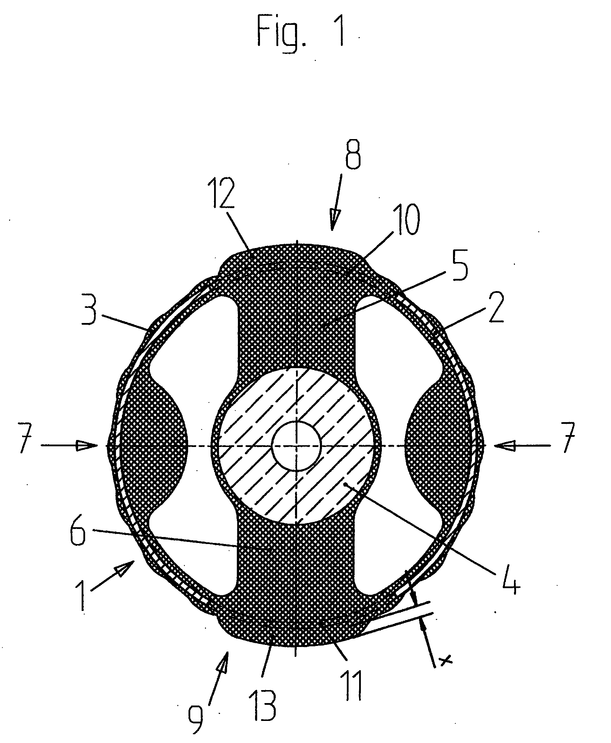

In der Figur 1 ist das in Buchsenform ausgebildete Aggregatelager 1 im Querschnitt dargestellt und zwar im unmontierten Zustand. Das Aggregatelager besteht im Wesentlichen aus dem Außenring 2 mit dem Elastomerüberzug 3 und dem inneren Stützteil 4, sowie den Gummifedern 5 und 6. Die im Betrieb auf das Lager 1, in Lastrichtung 7 einwirkenden Kräfte sind durch Pfeile dargestellt. In den Anschlussbereichen 8 und 9 der Gummifedern 5 und 6 sind im Außenring 2 die Aussparungen 10 und 11 vorgesehen. Durch diese Aussparungen 10 und 11 greifen die Gummifedern 5 und 6 mit ihren Endwülsten 12 und 13 hindurch und stehen über die von dem Elastomerüberzug 3 gebildeten Außenkontur des Außenrings hervor. Der Abstand X zwischen der Endwulsthöhe und der Außenkontur des Außenrings 2 wird so gewählt, dass er mindestens gleich groß ist wie das Schwundmaß der Gummifedern 5 und 6. Sofern die Endwülste 12 und 13 in ihrer Höhe dem Schwundmaß aus dem Federn 5 und 6 entsprechen, werden sie durch die Schrumpfung der Federn 5 und 6 in die Aussparungen 10 und 11 des Außenrings im Wesentlichen eingezogen. Es ist jedoch günstig, das Abstandsmaß X größer zu wählen, so dass beim Einbau des Aggregatelagers 1 in eine entsprechende Halterung auf die Federn 5 und 6 bereits eine Vorspannung ausgeübt wird.

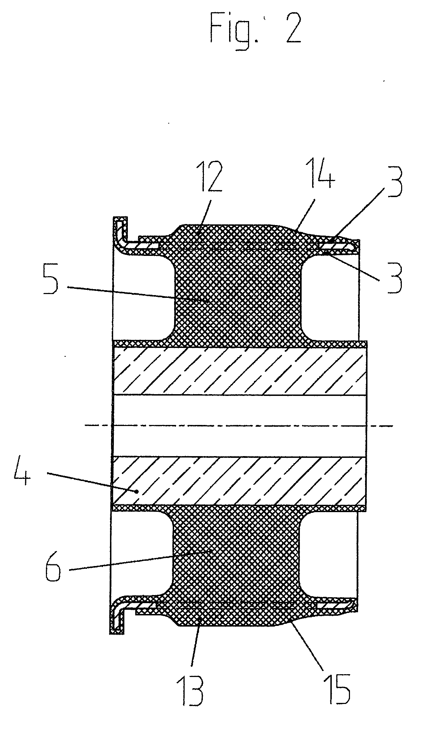

In der Figur 2 ist das Lager nach Figur 1 im Längsschnitt dargestellt. Sichtbar ist hier die Längsausdehnung der Gummifedern 5 und 6 sowie die Anordnung einer rampenähnlichen Ausbildung der Endwülste 12 und 13 auf der linken Seite der Figur, bezeichnet mit den Ziffern 14 und 15, wodurch der Einbau des Lagers 1 in seine Halterung erleichtert wird.

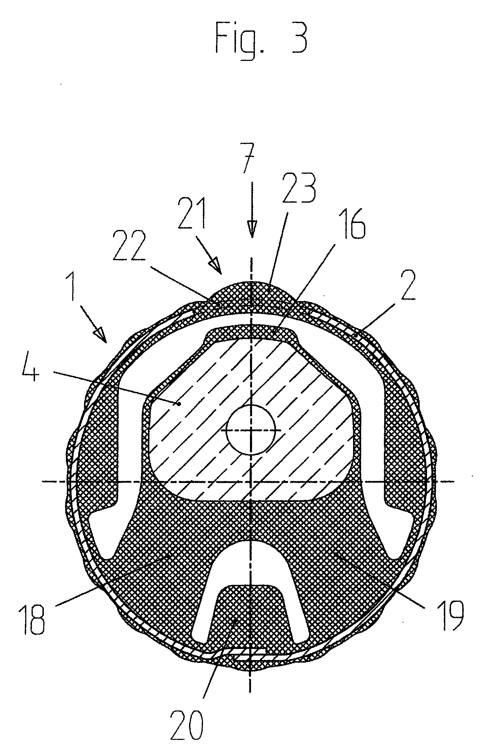

Die Figur 3 zeigt einen Querschnitt durch ein Aggregatelager 1, das in der Hauptlastrichtung 7 arbeitet. Der Zuganschlag 16 ist in diesem Beispiel stummelartig ausgebildet. Die Federung wird in der Hauptsache hier von den im Querschnitt gesehen V-artig ausgebildeten Federn 18 und 19 übernommen. Zwischen den Federn 18 und 19 ist ein Druckanschlagpuffer 20 eingefügt. Im Bereich 21 ist der Außenring 2 mit der Aussparung 22 ausgestattet. Die Aussparung 22 wird von dem Endwulst 23, der am Außenring 2 integriert ist, überdeckt. Die Gummifedern 18 und 19 ihrerseits sind direkt am Außenring 2 befestigt, ohne dass im Außenring Aussparungen eingefügt sind. Beim Einbau des Lagers 1 in eine Halterung wird die Endwulst 23 in die Aussparung 22 gedrückt und kommt an der radial liegenden Außenfläche des Anschlags 16 zur Anlage. Durch diese Lösung kann beim Einbau des Lagers in eine Halterung sowohl das aus der Schwindung der Federn 18 und 19 entstandene Schwundmaß als auch der durch die vorhandene axiale Durchdringung 17 entstandene Freiweg überbrückt werden.

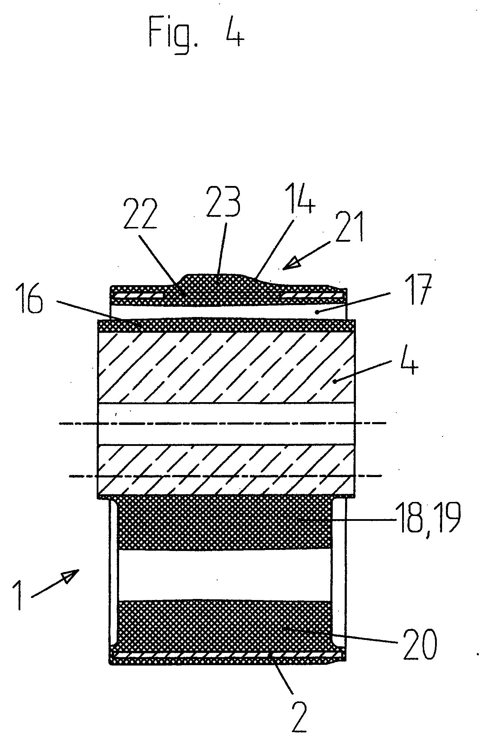

Die Figur 4 zeigt im Längsschnitt die Ausgestaltung des Lagers 1 mit der axialen Durchdringung 17. Durch die axiale Durchdringung 17 ist der Anschlag 16 von der Endwulst 23 getrennt. Um dennoch einen frühen Einsatz der Progression in Zugrichtung zu erreichen, ist der Endwulst 23 vorgesehen, der beim Einbau des Lagers 1 in eine Halterung nach innen gedrückt, mit seiner Innenseite an dem Anschlag 16 anliegt. Die Federn 18 und 19 erstrecken sich in diesem Ausführungsbeispiel über die gesamte axiale Länge des Lagers. Für den erwünschten Kennungsverlauf genügt es jedoch, wenn der Endwulst 23, der mit dem Anschlag 16 zusammen wirkt sich, lediglich über die Länge der Aussparung 21 erstreckt.

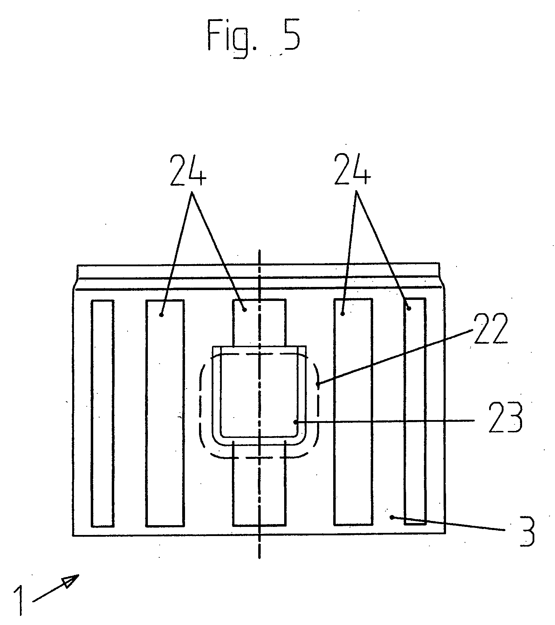

In der Figur 5 ist das Lager der Figuren 3 und 4 in der Draufsicht gezeigt, so dass die Form der Endwulst 23 und der Aussparung 22 sichtbar ist. Deutlich zu erkennen sind auch die Erhebungen 24 des Elastomerüberzugs 3 des Außenrings 2. Die Endwulst 23 überdeckt die Aussparung 22 auf der Figur gesehen, nach oben hin abfallend. Dieses erleichtert die Einfügung des Lagers 1 in seine Halterung.

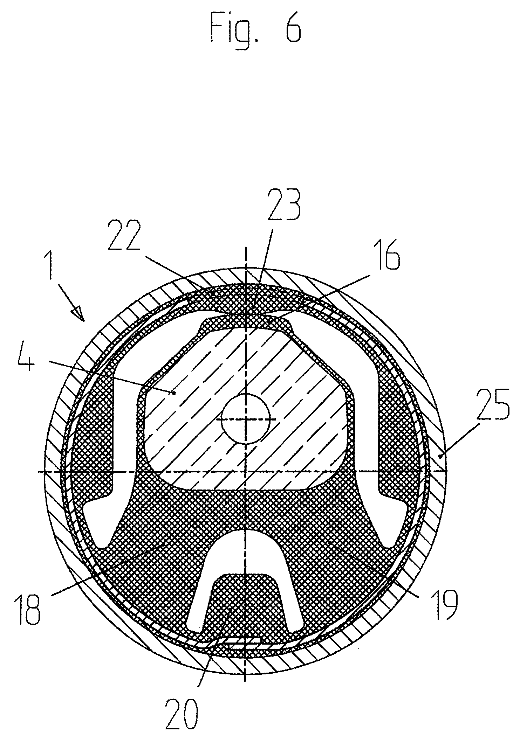

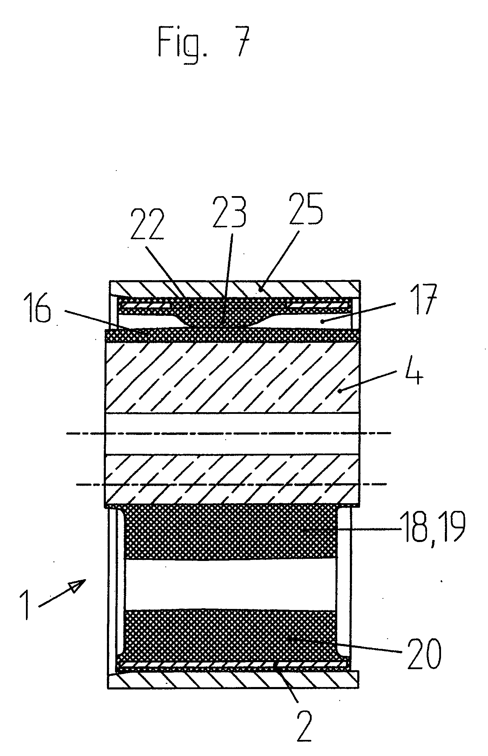

Die Figuren 6 und 7 zeigen im Quer- bzw. Längsschnitt das Lager 1, eingebaut in die Halterung 25. Die Endwulst 23 ist durch die Aussparung 22 gedrückt und liegt am Anschlag 16 an.

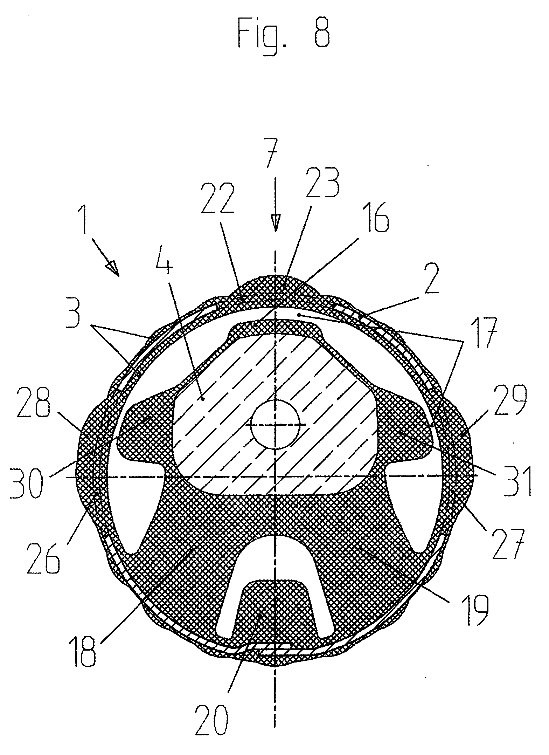

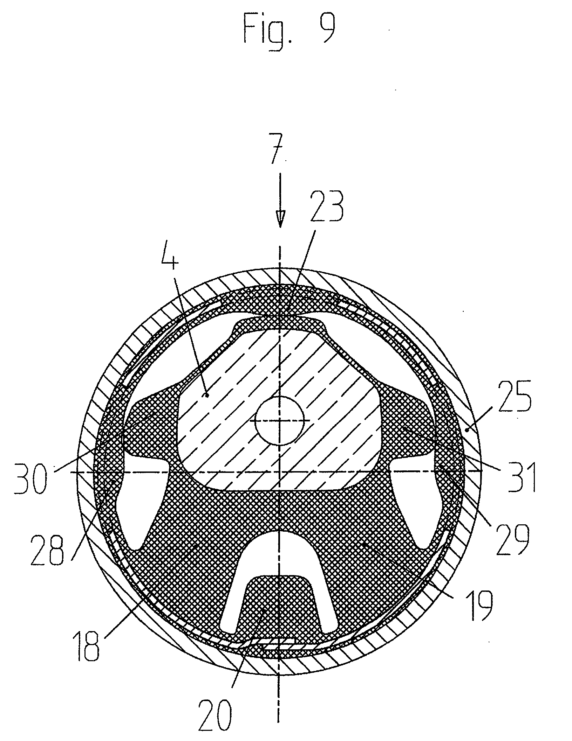

In den Figuren 8 und 9 ist eine Ausbildungsform gezeigt, mit der der Freiweg, welcher durch die Einfügung der axialen Durchdringung 17 entstanden ist, begrenzt werden soll. Dabei zeigt die Figur 8 das Lager 1 nach seiner Fertigstellung und die Figur 9 das Lager 9 im eingebauten Zustand. Die Ausbildung der Federn 18 und 19 sowie von Außenring 2 und Innenteil 4 einschließlich der Endwulste 23 und Aussparung 22 im Außenring 2 sind vergleichbar mit der Ausgestaltung nach den Figuren 3 bis 7. Ergänzend hierzu hat der Außenring 2 in seinen zur Hauptlastrichtung 7 seitlich liegenden Wänden die Zusatzaussparungen 26 und 27. Diese sind von den Auswölbungen 28 und 29 des Elastomerüberzugs 3 überdeckt und werden, wie auf der Figur 9 sichtbar, in montierter Lage nach innen in den Außenring 2 eingedrückt, in vergleichbarer Art, wie das mit den Endwülsten der Fall ist. Der Innenteil 4 ist mit den seitlichen Anschlägen 30, 31 ausgestattet, an denen die Auswölbungen 28 und 29 im montierten Zustand zur Anlage gelangen. Auf diese Weise kann dem Lager 1 eine ergänzende Freiwegbegrenzung in Querrichtung erteilt werden.

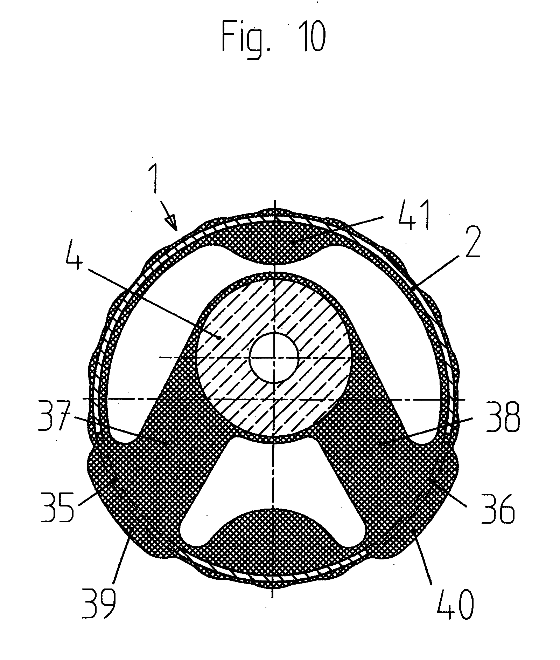

Die Figur 10 zeigt eine weitere Ausbildung des Lagers 1 im Querschnitt. Die Aussparungen 35 und 36 sind hier auf der unteren Hälfte des Außenrings 2. Dort greifen die V-förmig ausgebildeten Federbeine 37 und 38 der Gummifeder an. Ihre Endwülste 39 und 40 stehen über die Außenkontur des Außenrings 2 hervor. Durch den Einbau des Lagers 1 in seine Halterung wird über die eingedrückten Endwülste 39 und 40 das Stützteil 4 nach oben an den nach innen vorstehenden Anschlag 41 gedrückt. Der Abstand zwischen dem Stützteil 4 und dem Anschlag 41 entspricht der fertigungsgedingten Durchdringung 17 und dem durch Abkühlen entstandenen Schwundmaß bei der Herstellung des Lagers 1. Diese Ausbildung des Lagers 1 führt zu demselben Ziel wie zu Fig. 3 beschrieben, nur von einer anderen Seite bewerkstelligt.

Der Erfindungsgedanke kann auch bei Aggregatelagern angewendet werden, bei denen der Außenring keinen Elastomerüberzug hat, wenn beispielsweise kein Korrosionsschutz bzw. Toleranzausgleich erforderlich ist.

## Patentansprüche

1. Aggregatelager (1) in Buchsenform mit einem Außenring (2) und einem inneren Stützteil (4) sowie dazwischen angeordneten Gummifedern (5, 6), **dadurch gekennzeichnet, dass** der Außenring (2) zumindest in den Anschlussbereichen (8, 9) der Gummifedern (5, 6) vorzugsweise in der Hauptlastrichtung (7) mit Aussparungen (10, 11) versehen ist, und dass die Aussparungen (10, 11) mit Endwülsten (12, 13) versehen sind, die über die Außenkontur des Außenrings (2) hervor stehen.

2. Aggregatelager nach Anspruch 1, **dadurch gekennzeichnet, dass** der Abstand (X) zwischen der Endwulsthöhe und der Außenkontur des Außenrings (2) dem durch die Vulkanisation entstehende Schwundmaß an den Gummifedern (5, 6) entspricht.

3. Aggregatelager nach Anspruch 1, **dadurch gekennzeichnet, dass** der Abstand (X) zwischen der Endwulsthöhe und der Außenkontur des Außenrings größer ist als das Schwundmaß an den Gummifedern (5, 6).

4. Aggregatelager nach einem der Ansprüche 1 bis 3, **dadurch gekennzeichnet, dass** der Außenring (2) mit einem Elastomerüberzug (3) versehen ist.

5. Aggregatelager nach einem der Ansprüche 1 bis 4, **dadurch gekennzeichnet, dass** der Außenring (2) in dem bzw. den Bereichen (21) des fertigungsbedingten freien Abstands zwischen dem Außenring (2) und dem inneren Stützteil (4) mit einer der Anzahl der Bereiche (21) entsprechenden Anzahl von Aussparungen (22) versehen ist, und dass der Elastomerüberzug (3) des Außenrings (2) in diesen Bereichen (21) Verdickungen aufweist, die bei montiertem Lager (1) die fertigungsbedingten Räume (17) zwischen Außenring (2) und Stützteil (4) mindestens ausfüllen.

6. Aggregatelager nach einem der Ansprüche 1 bis 5, **dadurch gekennzeichnet, dass** der Außenring (2) in seinen zur Hauptlastrichtung (7) seitlich liegenden Wänden mit Zusatzaussparungen versehen ist, die von Auswölbungen (28, 29) des Elastomerüberzugs (3) überdeckt sind und die in montierter Lage radial nach innen in den Außenring eingedrückt, eine Begrenzung des Freiwegs des inneren Stützteils (4) bilden.
